# EUROPÄISCHE PATENTANMELDUNG

(11) **EP 2 187 195 A2**
(43) Veröffentlichungstag der Anmeldung: **19.05.2010**
(21) Anmeldenummer: 09014349.6
(22) Anmeldetag: 17.11.2009
(51) Int. Cl.: G01N 1/38

(54) **Vorrichtung und ein Verfahren zur Bereitstellung einer vergebbaren Konzentration mindestens einer Komponente in einem flüssigen Medium**

(30) Priorität: 18.11.2008 DE 102008058068
(71) Anmelder: Leica Microsystems CMS GmbH, 35578 Wetzlar (DE)
(72) Erfinder: Sieber, Jochen, Dr., 68163 Mannheim (DE); Dyba, Marcus, Dr., 69126 Heidelberg (DE); Seyfried, Volker, Dr., 69226 Nußloch (DE)
(74) Vertreter: Hassenbürger, Anneliese

(57) **Zusammenfassung**

Eine Vorrichtung zur Bereitstellung einer vorgebbaren Konzentration mindestens einer Komponente (1, 2) in einem flüssigen Medium (3), insbesondere in einer mikroskopischen Probe, mit einer Zuführeinrichtung (4) für die mindestens eine Komponente (1, 2) ist im Hinblick auf die sichere Durchführung auch von Langzeitmessungen derart ausgestaltet und weitergebildet, dass mittels der Zuführeinrichtung (4) die Einstellung oder Regelung der Konzentration der mindestens einen Komponente (1, 2) auf der Basis mittels eines mikroskopischen Verfahrens ermittelter Messdaten eines vorgebbaren Messparameters durchführbar ist. Des Weiteren ist ein entsprechendes Verfahren zur Bereitstellung einer vorgebbaren Konzentration mindestens einer Komponente (1, 2) in einem flüssigen Medium (3) angegeben.

## Beschreibung

Die Erfindung betrifft eine Vorrichtung zur Bereitstellung einer vorgebbaren Konzentration mindestens einer Komponente in einem flüssigen Medium, insbesondere in einer mikroskopischen Probe, mit einer Zuführeinrichtung für die mindestens eine Komponente. Des Weiteren betrifft die vorliegende Erfindung ein entsprechendes Verfahren zur Bereitstellung einer vorgebbaren Konzentration mindestens einer Komponente in einem flüssigen Medium.

Vorrichtungen und Verfahren der eingangs genannten Art sind aus der Praxis bekannt. Beispielsweise finden bekannte Vorrichtungen ihre Anwendung im Bereich der Mikroskopie, wobei Pipettierroboter bestimmte Mengen an Lösungen zu Proben führen bzw. pipettieren. Des Weiteren gibt es Vorrichtungen in der Mikroskopie, mit denen beispielsweise in Zellen bzw. in die Lösung, in der sich die Zellen befinden, eine bestimmte Menge eines Wirkstoffs injiziert wird. Auch werden Perfusionskammern im Bereich der Mikroskopie verwendet, wobei auch hier eine vorgebbare Konzentration mindestens einer Komponente in einem flüssigen Medium unter Zuhilfenahme einer Zuführeinrichtung für die mindestens eine Komponente bereitgestellt wird.

Bei den bekannten Vorrichtungen und Verfahren ist problematisch, dass sich die Konzentration der mindestens einen Komponente aufgrund von Zellreaktionen oder aufgrund von äußeren Einflüssen im Laufe der Zeit verändern kann, Dies verfälscht die Messungen, so dass beispielsweise bestimmte Langzeitmessungen mit den bekannten Vorrichtungen und Verfahren nicht möglich sind. Außerdem kann so durch die Einstellung der Konzentration der mindestens einen Komponente aktiv Einfluss auf die Probe und damit auch auf den Versuchsverlauf genommen werden.

Der vorliegenden Erfindung liegt daher die Aufgabe zugrunde, eine Vorrichtung zur Bereitstellung einer vorgebbaren Konzentration mindestens einer Komponente in einem flüssigen Medium sowie ein entsprechendes Verfahren anzugeben, wonach auch Langzeitmessungen in dem flüssigen Medium auf einfache Weise ermöglicht sind.

Erfindungsgemäß wird die voranstehende Aufgabe zunächst durch eine Vorrichtung mit den Merkmalen des Patentanspruchs 1 gelöst. Danach ist die Vorrichtung der eingangs genannten Art derart ausgestaltet und weitergebildet, dass mittels der Zuführeinrichtung die Einstellung oder Regelung der Konzentration der mindestens einen Komponente auf der Basis mittels eines mikroskopischen Verfahrens ermittelter Messdaten eines vorgebbaren Messparameters durchführbar ist.

In erfindungsgemäßer Weise ist erkannt worden, dass Langzeitmessungen dann möglich sind, wenn die Konzentration der mindestens einen Komponente, deren Konzentration sich mit der Zeit verändert hat, weitestgehend vorgebbar geregelt werden kann. Hierzu ist in weiter erfindungsgemäßer Weise mittels der Zuführeinrichtung die Einstellung oder Regelung der Konzentration der mindestens einen Komponente durchführbar, wobei die Einstellung oder Regelung auf der Basis mittels eines mikroskopischen Verfahrens ermittelter Messdaten eines vorgebbaren Messparameters, der sich mit der Konzentration der mindestens einen Komponente verändert, realisiert ist. Mit anderen Worten werden mittels eines mikroskopischen Verfahrens Messdaten eines vorgebbaren Messparameters aufgenommen und zur Einstellung oder Regelung der Konzentration der mindestens einen Komponente in Zusammenwirkung mit der Zuführeinrichtung verwendet. Dies stellt eine besonders elegante und einfache Möglichkeit der Einstellung oder Regelung der Konzentration der mindestens einen Komponente dar, da zur Aufnahme der für die Einstellung oder Regelung erforderlichen Messdaten ein mikroskopisches Verfahren mittels eines zur Mikroskopierung des flüssigen Mediums oder einer mikroskopischen Probe bereits vorhandenen Mikroskops durchführbar ist. Außerdem kann so durch die Einstellung der Konzentration der mindestens einen Komponente aktiv Einfluss auf die Probe und damit auch auf den Versuchsverlauf genommen werden.

Folglich ist mit der erfindungsgemäßen Vorrichtung eine Vorrichtung angegeben, mit der auch Langzeitmessungen in dem flüssigen Medium auf einfache Weise ermöglicht sind.

Des Weiteren können im Rahmen der vorliegenden Erfindung auch die Messdaten mehrerer Messparameter in vorteilhafter Weise genutzt werden.

Im Konkreten könnte die. Vorrichtung ein Mikroskop zur Ermittlung der Messdaten aufweisen. Dabei könnte es sich um ein bereits zur Untersuchung des Mediums oder der Probe vorhandenes Mikroskop handeln. Es könnte auch ein zweites Mikroskop zur Ermittlung der Messdaten eingesetzt werden.
Bei einer weiter konkreten Ausgestaltung der erfindungsgemäßen Vorrichtung könnten die Messdaten Bilddaten, vorzugsweise Ein- oder Mehrkanalbilder, sein. Derartige Bilddaten könnten auf vorgebbare Aspekte hin analysiert werden, um zu einer Einstellung oder Regelung der Konzentration der mindestens einen Komponente zu führen. Dabei könnten die Bilddaten mittels einer Bildanalyse unter Zugrundelegung eines vorgebbaren Messparameters weiterverarbeitet werden. Grundsätzlich könnten die Messdaten mittels Bildanalyse gewonnen sein.

Bei Langzeitmessungen kann so beispielsweise die Menge der Wirkstoffkomponenten über die Zeit hinweg definiert konstant gehalten oder auch gezielt verändert, beeinflusst oder geregelt werden, selbst wenn die Bedingungen für die Probe durch bestimmte äußere Einflüsse verändert werden.

Es können unterschiedliche Messparameter im Rahmen der erfindungsgemäßen Vorrichtung zur Anwendung kommen. Beispielsweise könnte der Messparameter die Helligkeit in dem Medium oder die Helligkeit einer vorgebbaren Struktur oder eines vorgebbaren Bereichs in dem Medium sein. Je nach Erfordernis könnte bei Überschreiten oder Unterschreiten einer vorgegebenen Helligkeit die Regelung der Konzentration eine die Helligkeit beeinflussenden Komponente gestartet werden. Eine Abhängigkeit zwischen Helligkeit und Konzentration der mindestens einen Komponente ist hierbei wesentlich.

Alternativ hierzu könnte der Messparameter die Form einer vorgebbaren Struktur oder eines vorgebbaren Bereichs in dem Medium sein, Hierbei bieten sich Bildanalyseverfahren zur Auswertung aufgenommener Messdaten an, Sobald eine vorgebbare Struktur von einem Sollwert abgewichen ist, kann die Regelung der Konzentration einen die Form der Struktur beeinflussenden Komponente gestartet werden. Dies ist in Situationen möglich, in denen die Form der vorgebbaren Struktur oder des vorgebbaren Bereichs von der Konzentration der mindestens einen Komponente abhängt.

In weiter vorteilhafter Weise könnte der Messparameter anzeigen, ab wann eine Veränderung oder mehrere aufeinander folgenden Veränderungen der Konzentration der mindestens einen Komponente gestartet oder gestoppt werden soll oder sollen. Dies könnte erfolgen, ohne dass die Konzentration einen direkten Einfluss auf die Messgröße hat.

Als weiterer Messparameter könnte die Auflösung bezüglich einer vorgebbaren Struktur oder eines vorgebbaren Bereichs in dem Medium dienen. Dabei ist wesentlich, dass die mittels der optischen Untersuchung erreichte Auflösung in einer Abhängigkeit zur Konzentration der Komponente steht. Ein Beispiel wäre die Veränderung des Brechungsindex durch die Veränderung der Konzentration mindestens einer Komponente.

Alternativ oder zusätzlich zu den genannten Techniken könnte eine Messgröße die Dichte von Signalen sein, wobei die Konzentration einen direkten Einfluss auf die Messgröße hat. Vorzugsweise könnten die Signale Fluoreszenzsignale sein.

In weiter vorteilhafter Weise könnten die Signale von Einzelmolekülen stammen. Vorzugsweise könnte die Dichte der Signale für die jeweilige Anwendung optimiert sein, Dabei könnte die Dichte derart eingestellt werden, dass sich die einzelnen Signale mit beugungsbegrenzter Mikroskopie auflösen lassen.

Als weiterer Messparameter könnte ein bestimmtes Ereignis "rare event" - bezüglich einer vorgebbaren Struktur oder eines vorgebbaren Bereichs in dem Medium dienen. Auch hier ist wesentlich, dass das Auftreten des Ereignisses von der Konzentration der mindestens einen Komponente abhängt, so dass aus dem Auftreten des Ereignisses ein Rückschluss auf die Konzentration der mindestens einen Komponente gezogen werden kann.

In weiter vorteilhafter Weise könnte der Messparameter anzeigen, ab wann eine Veränderung oder mehrere aufeinander folgenden Veränderungen der Konzentration der mindestens einen Komponente gestartet oder gestoppt werden soll oder sollen, ohne dass die Konzentration einen direkten Einfluss auf die Messgröße hat.

Die Einstellung oder Regelung der Konzentration der mindestens einen Komponente oder Wirkstoffkomponente in der Probe könnte dabei unter einer Rückregelung bzw. Rückkopplung auf der Basis der ermittelten Daten so lange erfolgen, bis das gewünschte Ergebnis bzw. die gewünschte Konzentration erreicht ist. Als gewünschtes Ergebnis kommt in den zuletzt genannten Fällen die Helligkeit, die Form, die Auflösung oder das Auftreten eines bestimmten Ereignisses in dem Medium bzw. einer vorgebbaren Struktur oder eines vorgebbaren Bereichs in dem Medium, die Dichte von Signalen oder Ähnliches in Frage.

Bei einer besonders einfachen Ausgestaltung der Vorrichtung könnte die Zuführeinrichtung per Hand aktivierbar sein. Ein Zuführen der mindestens einen Komponente in das flüssige Medium zur Erhöhung deren Konzentration könnte durch Öffnen eines Absperrhahns oder Ventils per Hand erfolgen, Ein Zuführen der Komponente erfolgt dann so lange, bis das gewünschte Ergebnis im mikroskopischen Verfahren detektierbar wird.

Bei einer komfortabler ausgestalteten Vorrichtung könnte der Zuführeinrichtung eine auf der Basis der Messdaten arbeitende Regeleinrichtung zugeordnet sein. Eine derartige Regeleinrichtung könnte automatisch die gewünschte Konzentration einstellen oder einregeln. Wenn eine Veränderung in dem Medium oder in der Probe erfolgt, könnte dann die Menge einer oder mehrerer Komponenten oder Wirkstoffkomponenten durch die Vorrichtung bis zum Erreichen der gewünschten Konzentration nachgeregelt werden. Auch hier könnte die Regelung durch automatische Bildanalyse erfolgen, wobei die Auswertekriterien bzw. Regelparameter vorher vom Benutzer festgelegt werden können. Die Regelung erfolgt also mit Hilfe der ermittelten Messdaten unter Berücksichtigung des vorgegebenen Parameters.

Die Regeleinrichtung könnte sowohl für einen automatischen Betrieb, d.h. für eine automatische Einstellung oder Regelung der Konzentration der mindestens einen Komponente, als auch für einen manuellen Betrieb ausgelegt sein. Im letztgenannten Fall könnte also eine Einstellung oder Regelung der Konzentration der mindestens einen Komponente per Hand erfolgen, wobei natürlich auch hier eine Rückkopplung über mittels des mikroskopischen Verfahrens ermittelte Messdaten erfolgt. Hierzu könnte die Regeleinrichtung eine Bedieneinheit zum Wechsel zwischen automatischem und manuellem Betrieb aufweisen.

Bei einer besonders einfachen Ausgestaltung könnte die Zuführeinrichtung eine Titrations- oder Pipettiereinrichtung aufweisen. Hierdurch ist ein besonders einfaches Zuführen einer gewünschten Komponente in das flüssige Medium ermöglicht.
Je nach Anwendungsfall könnte die Zuführeinrichtung alternativ hierzu einen Perfusor und/oder eine Perfusionskammer aufweisen. Mit einem derartigen Perfusor ist eine besonders präzise Zuführung der erforderlichen Menge der Komponente möglich.

Bei einer weiter alternativen Ausgestaltung der Vorrichtung könnte die Zuführeinrichtung eine Mischkammer mit vorzugsweise einer Mischeinrichtung für mindestens zwei Komponenten aufweisen. Mit einer derartigen Mischkammer könnten mindestens zwei Komponenten noch vor dem Zuführen in das flüssige Medium in der erforderlichen oder gewünschten Weise und Zusammensetzung miteinander vermischt werden. In diesem Fall reicht also eine Zuführleitung zu dem flüssigen Medium aus, obgleich mehrere Komponenten im gewünschten Mischungsverhältnis zugeführt werden können.

Ebenfalls zur Einstellung oder Regelung der Konzentration der mindestens einen Komponente könnte die Zuführeinrichtung eine Absaugeinrichtung aufweisen. Hierdurch könnte die Konzentration der mindestens einen Komponente nicht nur durch ein Zuführen einer weiteren Menge der Komponente sondern auch durch ein Reduzieren des flüssigen Mediums insgesamt und damit auch der darin befindlichen Komponente erfolgen.

Bei einer weiter vorteilhaften Ausgestaltung der erfindungsgemäßen Vorrichtung könnte der Zuführeinrichtung oder Regeleinrichtung eine Messeinrichtung für den pH-Wert und/oder die Osmolarität zugeordnet sein. Eine Regelung oder Einstellung der Konzentration der mindestens einen Komponente könnte hierbei zusätzlich durch die Messdaten eines oder mehrerer weiterer Parameter optimiert werden, Man müsste sich in diesem Fall nicht nur auf die mittels des mikroskopischen Verfahrens ermittelten Messdaten stützen. Eine jede Kombination unterschiedlicher Messparameter könnte unter Berücksichtigung der individuellen Anforderung an eine Einstellung oder Regelung der Konzentration der mindestens einen Komponente sinnvoll sein. Hierbei ist immer auf den jeweiligen Anwendungsfall abzustellen,

Letztendlich kann die erfindungsgemäße Vorrichtung in jedem Bereich der Mikroskopie in vorteilhafter Weise eingesetzt werden. Insbesondere in Zusammenhang mit Biosensors oder Fluorogen Activating Proteins (FAPs) ist die erfindungsgemäße Vorrichtung besonders nützlich, da z. B. die Konzentration des Fluorogens über die Vorrichtung geregelt werden kann. Derartige FAPs/Biosensors sind bspw. in der WO 2004/025268 A2 und WO 2008/092041 A2 beschrieben.

Durch die Zugabe oder den Abzug einer Wirkstoffkomponente, also die Veränderung der Konzentration einer oder mehrerer Wirkstoffkomponenten, die durch Bindung an eine bestimmte Struktur eine oder mehrere ihrer Eigenschaften ändern - beispielsweise von einem fluoreszierenden in einen nichtfluoreszierenden Zustand übergehen oder umgekehrt, beispielsweise spektrale Eigenschaften usw. -, kann die Konzentration exakt auf die Erfordernisse der verwendeten Mikroskopiermethode angepasst werden.

Auch kann der Einsatz der Vorrichtung zur exakten Regelung zusammen mit FAPs/Biosensors im Single Particle Tracking und FCS in diesem Bereich die Qualität der Ergebnisse positiv beeinflussen.

Die oben erwähnte Aufgabe wird des Weiteren durch ein Verfahren zur Bereitstellung einer vorgebbaren Konzentration mindestens einer Komponente in einem flüssigen Medium mit den Merkmalen des Patentanspruchs 16 gelöst. Danach ist ein Verfahren der eingangs genannten Art derart ausgestaltet und weitergebildet, dass mittels der Zuführeinrichtung die Einstellung oder Regelung der Konzentration der mindestens einen Komponente auf der Basis mittels eines mikroskopischen Verfahrens ermittelter Messdaten eines vorgebbaren Messparameters durchgeführt wird.

Mit dem erfindungsgemäßen Verfahren sind ebenfalls Langzeitmessungen in dem flüssigen Medium auf einfache Weise ermöglicht, da eine Konzentration mindestens einer Komponente auf einfache Weise einstellbar oder regelbar ist,

Insbesondere bei Langzeitmessungen sind sowohl das erfindungsgemäße Verfahren als auch die erfindungsgemäße Vorrichtung vorteilhaft, da ein Bleichen eines Farbstoffs durch Zuführung neuen Farbstoffs weitestgehend kompensiert werden kann, Diese Zufuhr der Farbstoffkomponente ist mittels der erfindungsgemäßen Vorrichtung und mittels des erfindungsgemäßen Verfahrens auf einfache Weise unter Berücksichtigung der ermittelten Messdaten regelbar.
Zur Vermeidung von Wiederholungen wird hinsichtlich weiterer vorteilhafter Ausgestaltungen des erfindungsgemäßen Verfahrens auf die vorangehende Beschreibung verwiesen, wo bereits verfahrensmäßige Vorteile im Zusammenhang mit der erfindungsgemäßen Vorrichtung und deren Ausgestaltung beschrieben sind.

Zusammenfassend darf festgehalten werden, dass mit der erfindungsgemäßen Vorrichtung und mit dem erfindungsgemäßen Verfahren die Konzentration einer oder mehrerer Komponenten in einer mikroskopischen Probe anhand von mit dem jeweiligen mikroskopischen Verfahren ermittelten Mess- oder Bilddaten exakt eingestellt oder geregelt werden kann. Bislang mussten Konzentrationen von Komponenten zeitaufwendig durch Experimentieren ermittelt werden, wobei mit der erfindungsgemäßen Vorrichtung und mit dem erfindungsgemäßen Verfahren je nach ermittelter Messdaten eine sofortige Regelung oder Einstellung der Konzentrationen während des Experiments möglich ist.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung dreier Ausführungsbeispiele einer erfindungsgemäßen Vorrichtung anhand der Zeichnung zu verweisen. In Verbindung mit der Erläuterung der bevorzugten Ausführungsbeispiele der erfindungsgemäßen Vorrichtung anhand der Zeichnung werden auch im Allgemeinen bevorzugte Ausgestaltungen und Weiterbildungen der Lehre erläutert. In der Zeichnung zeigen
- Fig. 1: in einer schematischen Seitenansicht ein erstes Ausführungsbeispiel einer erfindungsgemäßen Vorrichtung,
- Fig. 2: in einer schematischen Seitenansicht ein zweites Ausführungsbeispiel einer erfindungsgemäßen Vorrichtung und
- Fig. 3: in einer schematischen Seitenansicht ein drittes Ausführungsbeispiel einer erfindungsgemäßen Vorrichtung.

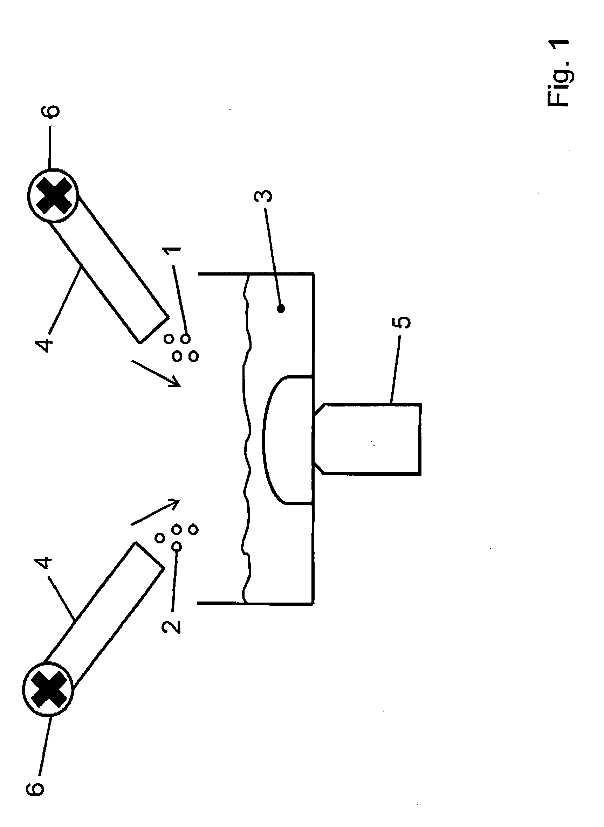

Fig. 1 zeigt in einer schematischen Seitenansicht ein erstes Ausführungsbeispiel einer erfindungsgemäßen Vorrichtung zur Bereitstellung einer vorgebbaren Konzentration zweier Komponenten 1 und 2 in einem flüssigen Medium 3. Dabei handelt es sich um eine mikroskopische Probe, in die mit einer Zuführeinrichtung 4 sowohl die Komponente 1 als auch die Komponente 2 zugegeben werden kann. Im Hinblick auf die sichere Durchführung auch von Langzeitmessungen in dem flüssigen Medium 3 ist mittels der Zuführeinrichtung 4 die Einstellung oder Regelung der Konzentration der Komponenten 1 und 2 auf der Basis mittels eines mikroskopischen Verfahrens ermittelter Messdaten eines vorgebbaren Messparameters durchführbar.

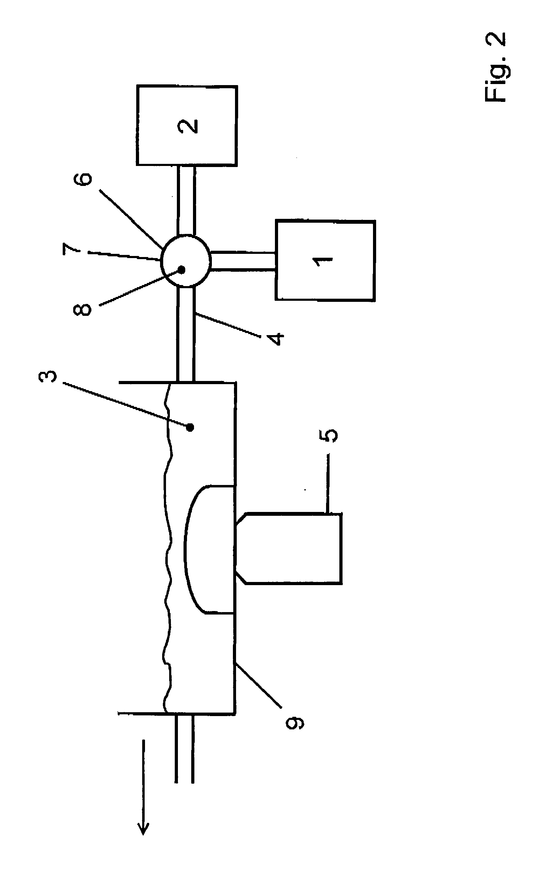

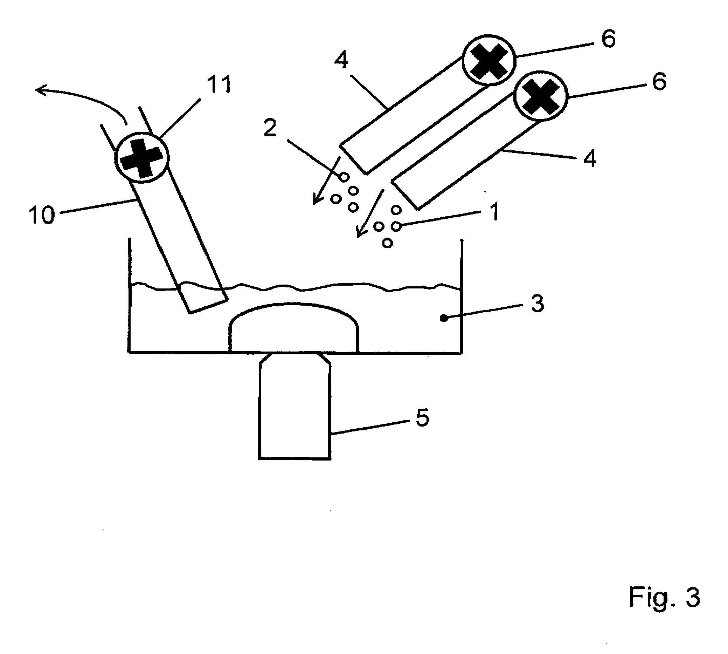

Im Konkreten weist die Vorrichtung ein Mikroskop 5 zur Ermittlung der Messdaten auf. Das Mikroskop 5 ist in Fig. 1 sowie auch in den Fig. 2 und 3 lediglich schematisch mit seinem Objektiv dargestellt, das zur Beobachtung des flüssigen Mediums 3 bzw. darin befindlicher Strukturen angeordnet ist.

Die Messdaten sind Bilddaten, wobei der Messparameter beispielsweise die Auflösung bezüglich einer vorgebbaren Struktur oder eines vorgebbaren Bereichs in dem Medium 3 ist.

Sobald die von der Konzentration der Komponente 1 und/oder 2 abhängige Auflösung von einer vorgebbaren Qualität abweicht, wird die Konzentration der Komponente 1 oder der Komponenten 1 und 2 oder der Komponente 2 in der erforderlichen Weise erhöht. Diese Erhöhung der Konzentration erfolgt so lange, bis die Auflösung wieder der gewünschten Qualität entspricht. Insoweit ist hier eine Rückkopplung ermöglicht.

Als Messgröße könnte auch die Dichte von Signalen dienen, wobei die Konzentration direkten Einfluss auf die Messgröße hat. Derartige Signale können bspw. Fluoreszenzsignale sein.

Der Zuführeinrichtung 4 ist eine Regeleinrichtung 6 zugeordnet, die entweder per Hand aktivierbar ist oder automatisch betrieben werden kann. Genauer gesagt kann die Regeleinrichtung 6 auf der Basis der ermittelten Messdaten des vorgegebenen Messparameters gesteuert werden, so dass ein Regelkreis bereitgestellt ist.

Fig. 2 zeigt in einer schematischen Seitenansicht ein zweites Ausführungsbeispiel einer erfindungsgemäßen Vorrichtung. Bei diesem Ausführungsbeispiel werden zwei Komponenten 1 und 2 jeweils aus einem separaten Reservoir mittels einer Mischeinrichtung 8 in einer Mischkammer 7 in der erforderlichen Weise vermischt. Die in der Mischkammer 7 angeordnete Mischeinrichtung 8 hat hier auch die Funktion der Regeleinrichtung 6. Nachdem die beiden Komponenten 1 und 2 in der erforderlichen Weise zusammengemischt worden sind, werden sie mittels der Zuführeinrichtung 4 in das flüssige Medium 3 eingebracht.

Das flüssige Medium 3 befindet sich bei dem hier gezeigten zweiten Ausführungsbeispiel in einer Perfusionskammer 9. Die Perfusionskammer 9 ist als Durchflusskammer ausgebildet, wobei der Flüssigkeitsstand in der Perfusionskammer 9 konstant gehalten werden kann. Wenn aus der Zuführeinrichtung 4 Komponenten 1 und/oder 2 in die Perfusionskammer 9 eingebracht werden, kann eine gleiche Menge an Medium 3 aus der Perfusionskammer 9 wieder herausgeführt werden.

Fig. 3 zeigt in einer schematischen Seitenansicht ein drittes Ausführungsbeispiel einer erfindungsgemäßen Vorrichtung. Zwei Komponenten 1 und 2 können über Zuführeinrichtungen 4 in das flüssige Medium 3 eingebracht werden. Hierzu weisen die Zuführeinrichtungen 4 der Komponenten 1 und 2 jeweils eine Regeleinrichtung 6 auf,

Zur Konstanthaltung des Flüssigkeitsniveaus in dem Medium 3 weist dieses Ausführungsbeispiel eine Absaugeinrichtung 10 auf. Auch die Absaugeinrichtung 10 weist eine Regeleinrichtung 11 auf.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Patentansprüche verwiesen,

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Komponente
- 2: Komponente
- 3: Medium
- 4: Zuführeinrichtung
- 5: Mikroskop
- 6: Regeleinrichtung
- 7: Mischkammer
- 8: Mischeinrichtung
- 9: Perfusionskammer
- 10: Absaugeinrichtung
- 11: Regeleinrichtung

## Patentansprüche

1. Vorrichtung zur Bereitstellung einer vorgebbaren Konzentration mindestens einer Komponente (1, 2) in einem flüssigen Medium (3), insbesondere in einer mikroskopischen Probe, mit einer Zuführeinrichtung (4) für die mindestens eine Komponente (1, 2),
**dadurch gekennzeichnet, dass** mittels der Zuführeinrichtung (4) die Einstellung oder Regelung der Konzentration der mindestens einen Komponente (1, 2) auf der Basis mittels eines mikroskopischen Verfahrens ermittelter Messdaten eines vorgebbaren Messparameters durchführbar ist.

2. Vorrichtung nach Anspruch 1, **dadurch gekennzeichnet, dass** die Vorrichtung ein Mikroskop (5) zur Ermittlung der Messdaten aufweist.

3. Vorrichtung nach Anspruch 1 oder 2, **dadurch gekennzeichnet, dass** die Messdaten mittels Bildanalyse gewonnen oder mittels Bildanalyse verarbeitet sind.

4. Vorrichtung nach einem der Ansprüche 1 bis 3, **dadurch gekennzeichnet, dass** der Messparameter die Helligkeit in dem Medium (3) oder die Helligkeit einer vorgebbaren Struktur oder eines vorgebbaren Bereichs in dem Medium (3) ist.

5. Vorrichtung nach einem der Ansprüche 1 bis 3, **dadurch gekennzeichnet, dass** der Messparameter anzeigt, ab wann eine Veränderung oder mehrere aufeinander folgenden Veränderungen der Konzentration der mindestens einen Komponente gestartet oder gestoppt werden soll oder sollen.

6. Vorrichtung nach einem der Ansprüche 1 bis 3, **dadurch gekennzeichnet, dass** der Messparameter die Auflösung bezüglich einer vorgebbaren Struktur oder eines vorgebbaren Bereichs in dem Medium (3) ist.

7. Vorrichtung nach einem der Ansprüche 1 bis 3, **dadurch gekennzeichnet, dass** eine Messgröße die Dichte von Signalen ist, wobei die Konzentration einen direkten Einfluss auf die Messgröße hat.

8. Vorrichtung nach Anspruch 7, **dadurch gekennzeichnet, dass** die Signale Fluoreszenzsignale sind.

9. Vorrichtung nach einem der Ansprüche 1 bis 3, **dadurch gekennzeichnet, dass** der Messparameter ein bestimmtes Ereignis ("rare event") bezüglich einer vorgebbaren Struktur oder eines vorgebbaren Bereichs in dem Medium (3) ist.

10. Vorrichtung nach Anspruch 11, **dadurch gekennzeichnet, dass** der Messparameter anzeigt, ab wann eine Veränderung oder mehrere aufeinander folgenden Veränderungen der Konzentration der mindestens einen Komponente gestartet oder gestoppt werden soll oder sollen.

11. Vorrichtung nach einem der Ansprüche 1 bis 10, **dadurch gekennzeichnet, dass** der Zuführeinrichtung (4) eine auf der Basis der Messdaten arbeitende Regeleinrichtung (6) zugeordnet ist.

12. Vorrichtung nach einem der Ansprüche 1 bis 11, **dadurch gekennzeichnet, dass** die Zuführeinrichtung (4) eine Titrations- oder Pipettiereinrichtung aufweist.

13. Vorrichtung nach einem der Ansprüche 1 bis 12, **dadurch gekennzeichnet, dass** die Zuführeinrichtung (4) einen Perfusor und/oder eine Perfusionskammer (9) aufweist.

14. Vorrichtung nach einem der Ansprüche 1 bis 13, **dadurch gekennzeichnet, dass** die Vorrichtung im Bereich der Mirkroskopie mit FAPs/Biosensors einsetzbar ist.

15. Vorrichtung nach einem der Ansprüche 1 bis 14, **dadurch gekennzeichnet, dass** die Vorrichtung im Bereich des Single-Particle-Tracking oder der FCS einsetzbar ist.

16. Verfahren zur Bereitstellung einer vorgebbaren Konzentration mindestens einer Komponente (1, 2) in einem flüssigen Medium (3), insbesondere in einer mikroskopischen Probe und insbesondere mittels einer Vorrichtung nach einem der Ansprüche 1 bis 15, mit einer Zuführeinrichtung (4) für die mindestens eine Komponente (1, 2),
**dadurch gekennzeichnet, dass** mittels der Zuführeinrichtung (4) die Einstellung oder Regelung der Konzentration der mindestens einen Komponente (1, 2) auf der Basis mittels eines mikroskopischen Verfahrens ermittelter Messdaten eines vorgebbaren Messparameters durchgeführt wird.
